# DEMANDE DE BREVET EUROPEEN

(11) **EP 4 016 246 A1**
(43) Date de publication de la demande: **22.06.2022**
(21) Numéro de dépôt: 21215230.0
(22) Date de dépôt: 16.12.2021
(51) Int. Cl.: G06F 1/26

(54) **SYSTÈME ÉLECTRONIQUE À CONSOMMATION STATIQUE RÉDUITE**

(30) Priorité: 18.12.2020 FR 2013744
(71) Demandeur: STMicroelectronics (Rousset) SAS, 13790 Rousset (FR)
(72) Inventeur: BIENVENU, Philippe, 83470 SAINT- MAXIMIN (FR)
(74) Mandataire: Cabinet Beaumont

(57) **Abrégé**

La présente description concerne un système électronique (30) comprenant, électriquement en parallèle entre des premier et deuxième noeuds (A, C), au moins un premier circuit électronique (20) alimenté entre les premier et deuxième noeuds, un régulateur (16) d'une tension (V_{REG}) entre le deuxième noeud et un troisième noeud (B), et un deuxième circuit électronique (18) entre les deuxième et troisième noeuds (C).

## Description

### Domaine technique

La présente description concerne de façon générale un système électronique comprenant des circuits électroniques.

### Technique antérieure

La consommation statique d'un système électronique est la puissance électrique consommée par le système électronique indépendamment de son activité. A titre d'exemple, pour un système électronique correspondant à un circuit intégré comprenant des transistors à effet de champ à grille isolée, la consommation statique comprend la consommation pour maintenir les états logiques des transistors. Il est généralement souhaitable que la consommation statique d'un système électronique soit la plus faible possible.

Pour certaines applications, la consommation statique du système électronique peut être un facteur critique. Cela est le cas dans le domaine automobile, le système électronique correspondant alors au réseau de bord de l'automobile. En effet, lorsque le système électronique est alimenté par une batterie, la consommation statique du système électronique a un impact direct sur l'autonomie de la batterie. Par ailleurs, une consommation électrique élevée entraine également une élévation de température des modules électroniques qui est préjudiciable. En outre, la tendance est à l'augmentation de la tension d'alimentation des réseaux de bord des automobiles, ce qui entraîne une augmentation de la consommation statique.

### Résumé de l'invention

Un objet d'un mode de réalisation est de prévoir un système électronique palliant tout ou partie des inconvénients des systèmes électroniques décrits précédemment.

Un autre objet d'un mode de réalisation est que le système électronique a une consommation statique réduite.

Un mode de réalisation prévoit un système électronique comprenant, électriquement en parallèle entre des premier et deuxième noeuds, au moins un premier circuit électronique alimenté entre les premier et deuxième noeuds, un régulateur d'une tension entre le deuxième noeud et un troisième noeud, et un deuxième circuit électronique entre les deuxième et troisième noeuds.

Un mode de réalisation prévoit également un procédé comprenant l'alimentation entre des premier et deuxième noeuds d'au moins un premier circuit électronique, la régulation d'une tension entre le deuxième noeud et un troisième noeud par un régulateur électriquement en parallèle du premier circuit électronique entre les premier et deuxième noeuds, et l'alimentation entre les deuxième et troisième noeuds d'un deuxième circuit électronique.

Selon un mode de réalisation, le système électronique ou le procédé comprend un premier interrupteur en série avec le premier circuit électronique entre les premier et deuxième noeuds.

Selon un mode de réalisation, le système électronique ou le procédé comprend un deuxième interrupteur reliant le troisième noeud à un noeud de connexion en série entre le premier circuit électronique et le premier interrupteur.

Selon un mode de réalisation, au moins un troisième circuit électronique est alimenté entre les premier et troisième noeuds.

Selon un mode de réalisation, au moins un troisième interrupteur est électriquement en série avec le troisième circuit électronique entre les premier et troisième noeuds.

Selon un mode de réalisation, le premier circuit électronique comprend un diviseur de tension.

Selon un mode de réalisation, le premier circuit électronique comprend un amplificateur.

Selon un mode de réalisation, le système électronique reçoit entre les premier et troisième noeuds une tension supérieure à 15 V et le régulateur est configuré pour fournir la tension entre les deuxième et troisième noeuds inférieure à 10 V.

Un mode de réalisation prévoit également un véhicule comprenant un système électronique tel que défini précédemment et une source de tension alimentant le système électronique.

Selon un mode de réalisation, la source de tension comprend une batterie d'accumulateurs électriques.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon partielle et schématique, un exemple d'un système électronique alimenté par une batterie d'accumulateurs ;
la figure 2 représente, de façon partielle et schématique, un mode de réalisation d'un système électronique alimenté par une batterie d'accumulateurs ;
la figure 3 représente, de façon partielle et schématique, un autre mode de réalisation d'un système électronique alimenté par une batterie d'accumulateurs ;
la figure 4 représente, de façon partielle et schématique, un exemple plus détaillé d'une partie du système électronique de la figure 1 ;
la figure 5 représente, de façon partielle et schématique, un mode de réalisation plus détaillé d'une partie du système électronique de la figure 2 ;
la figure 6 représente, de façon partielle et schématique, un autre exemple plus détaillé d'une partie du système électronique de la figure 1 ; et
la figure 7 représente, de façon partielle et schématique, un autre mode de réalisation plus détaillé d'une partie du système électronique de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les étapes et éléments utiles à la compréhension des modes de réalisation décrits ont été représentés et sont détaillés. Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments. Sauf précision contraire, les expressions "environ", "approximativement", "sensiblement", et "de l'ordre de" signifient à 10 % près, de préférence à 5 % près.

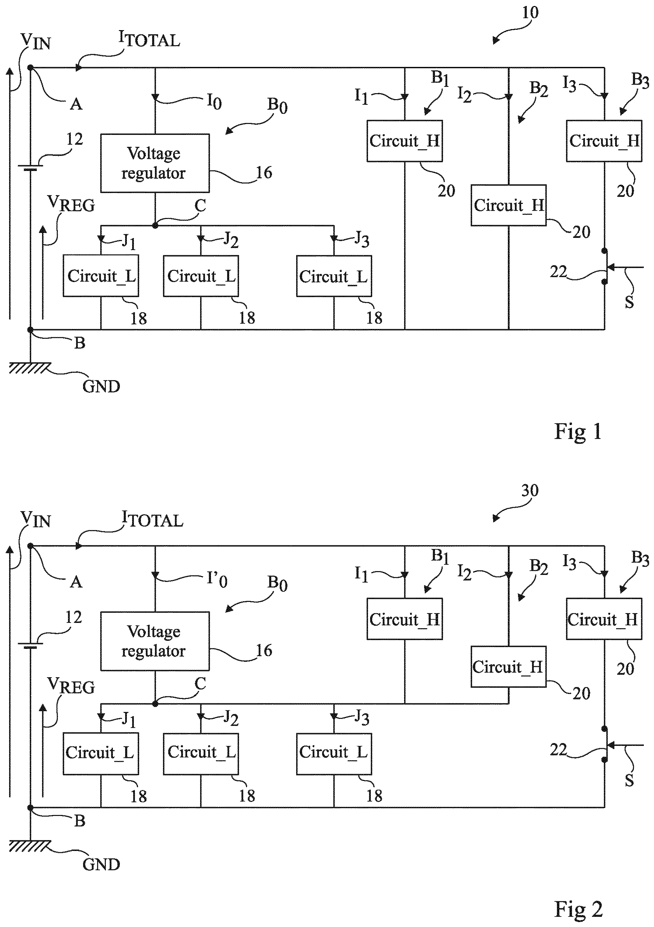

La figure 1 représente un exemple de système électronique 10 alimenté par une source 12 d'une tension d'alimentation V_{IN}, par exemple une batterie d'accumulateurs électriques ou un générateur électrique. Le système électronique 10 comprend des noeuds A et B entre lesquels la tension d'alimentation est appliquée. Le noeud B joue, pour le système électronique 10, le rôle d'une source d'un potentiel de référence bas GND.

Le système électronique 10 comprend une première branche B₀ connectée entre les noeuds A et B. La première branche B₀ comprend un régulateur de tension 16 (Voltage regulator) alimentant M circuits électroniques 18 (Circuit_L), M étant un nombre entier supérieur ou égal à 1, trois circuits électroniques 18 étant représentés en figure 1 à titre d'exemple.

Le régulateur de tension 16 comprend une entrée couplée au noeud A et un noeud de sortie C et est configuré pour fournir une tension V_{REG} régulée entre les noeuds C et B. Les M circuits électroniques 18 sont montés en parallèle entre le noeud C de sortie du régulateur de tension 16 et le noeud B. Selon un mode de réalisation, le régulateur de tension 16 est un régulateur linéaire, par exemple un régulateur de type shunt ou un régulateur série. La tension V_{REG} peut être inférieure à la tension V_{IN} et les circuits électroniques 18 peuvent être des circuits devant être alimentés à une tension plus basse que la tension V_{IN}.

Le système électronique 10 comprend une deuxième branche B₁ ou des deuxièmes branches B₁ à B_{N}, N étant un entier naturel supérieur ou égal à 2, connectées entre les noeuds A et B, trois deuxièmes branches B₁, B₂, et B₃ étant représentées en figure 1 à titre d'exemple. Chaque deuxième branche Bⱼ, j variant de 1 à N, comprend un circuit électronique 20 (Circuit_H).

Selon un exemple d'application, le système électronique 10 peut correspondre à une partie d'un réseau de bord d'un véhicule automobile. Les circuits électroniques 18 sont des circuits analogiques ou des circuits numériques alimentés par le régulateur de tension 16. Les circuits électroniques 20 peuvent comprendre des circuits de fourniture de tensions alimentant d'autres circuits, non représentés, du système électronique 10.

On appelle I_{TOTAL} le courant fourni au noeud A et on appelle Iⱼ, j variant de 0 à N, les courants circulant dans chaque branche Bⱼ depuis le noeud A. En particulier, I₀ est le courant circulant dans le régulateur de tension 16. Par application de la loi des noeuds, le courant I₀ est égal à la somme des courants Iⱼ, j variant de 0 à N. Lorsque le système 10 est inactif, tout en recevant la tension V_{IN}, les courants I₀ à I_{N} peuvent ne pas être égaux à zéro. Au moins certains des courants I₀ à I_{N} peuvent alors correspondre à des courants de fuite. La consommation statique du système électronique 10 correspond alors à la puissance électrique consommée par le système électrique, c'est-à-dire au produit de la tension V_{IN} et du courant I_{TOTAL}. On note J₁ à J_{M} les courants circulants dans les M circuits électroniques 18. Par application de la loi des noeuds, pour le système électronique 10, la somme des courants J₁ à J_{M} est égale au courant I₀.

Pour réduire la consommation statique du système électronique 10, une pratique courante est de réduire la consommation statique de chaque circuit 18 et 20. Une autre pratique courante est d'interrompre l'alimentation de certains circuits 18 et 20 lorsque cela est possible en fonction de l'activité du système électronique 10. Dans ce but, à titre d'exemple, au moins l'une des branches Bⱼ, j variant de 1 à N, peut comprendre un interrupteur 22 en série avec le circuit électronique 20, un interrupteur 22 étant représenté sur la branche B₃ en figure 1 à titre d'exemple. L'interrupteur 22 peut être commandé par un signal S, par exemple fourni par l'un des circuits électroniques 18. L'ouverture de l'interrupteur 22 entraîne l'arrêt de la circulation du courant Iⱼ dans la branche Bⱼ, j variant de 1 à N.

Toutefois, pour certaines applications, la diminution de la consommation statique du système électronique 10, obtenue en réduisant la consommation statique de chaque circuit 18 et 20 et/ou en interrompant l'alimentation de certains circuits 18 et 20 peut ne pas être suffisante.

La figure 2 représente, de façon partielle et schématique, un mode de réalisation d'un système électronique 30. Le système électronique 30 comprend l'ensemble des éléments du système électronique 10 à la différence qu'au moins l'une des branches Bⱼ, j variant de 1 à N, n'est pas connectée entre les noeuds A et B mais entre les noeuds A et C. A titre d'exemple, en figure 2, les branches B₁ et B₂ sont représentées connectées entre les noeuds A et C.

On appelle I'₀ le courant circulant dans le régulateur de tension 16 pour le système électronique 30 en figure 2 pour mettre en évidence que l'intensité de ce courant est différente de celle du courant I₀ circulant dans le régulateur de tension 16 pour le système électronique 10 en figure 1. Les autres courants Iⱼ, j variant de 1 à N, circulant dans les branches Bⱼ pour le système électronique 30 en figure 2 sont sensiblement les mêmes que pour le système électronique 10. Par application de la loi des noeuds, pour le système électronique 30, la somme des courants J₁ à J_{M} est égale à la somme du courant I'₀ et des courants Iⱼ des branches Bⱼ connectées au noeud C. Il en résulte que, pour le système électronique 30, le courant I_{TOTAL} est égal à la somme du courant I'₀ et des courants des branches Bⱼ qui ne sont pas connectées au noeud C.

L'intensité du courant I_{TOTAL} pour le système électronique 30 est donc inférieure strictement à l'intensité du courant I_{TOTAL} pour le système électronique 10. Une réduction de la consommation statique du système électronique 30 par rapport au système électronique 10 est donc obtenue.

Il peut être souhaitable que toutes les branches Bⱼ, j variant de 1 à N, ne soient pas connectées entre les noeuds A et C, mais que certaines des branches Bⱼ, j variant de 1 à N, restent connectées entre les noeuds A et B. Cela peut être le cas dans la mesure où il peut être souhaitable que le courant I'₀ reste positif pour le fonctionnement du régulateur de tension 16. Cela peut en outre être le cas lorsque le circuit électronique 20 d'une branche Bⱼ a besoin, pour son fonctionnement, d'une référence de tension peu bruitée. En effet, le potentiel au noeud B est moins bruité que le potentiel au noeud C. Cela peut en outre être le cas lorsque le circuit électronique 20 d'une branche Bⱼ présente un courant de consommation Iⱼ bruité susceptible de perturber la tension de régulation au noeud C.

Selon un mode de réalisation, la tension d'alimentation V_{IN} est supérieure à 10 V. Selon un mode de réalisation, un convertisseur, non représenté, peut être prévu entre la batterie 12 et le noeud A. Selon un mode de réalisation, le régulateur de tension 16 est configuré pour fournir la tension régulée V_{REG} comprise entre 2 V et 6 V, par exemple environ égale à 3 V ou environ égale à 5 V.

A titre d'exemple, le circuit électronique 20 peut être un circuit fournissant une tension pour la polarisation d'un composant électronique du système électronique, non représenté, par exemple un transistor à effet de champ à grille isolée, également appelé transistor MOS.

De façon avantageuse, la réduction de la consommation statique du système 30 est obtenue sans entraîner une réduction de l'intensité des courants Iⱼ circulant dans les branches Bⱼ, j variant de 1 à N. Ceci permet de conserver des courants Iⱼ d'intensités suffisamment élevées pour le bon fonctionnement des circuits électroniques 20.

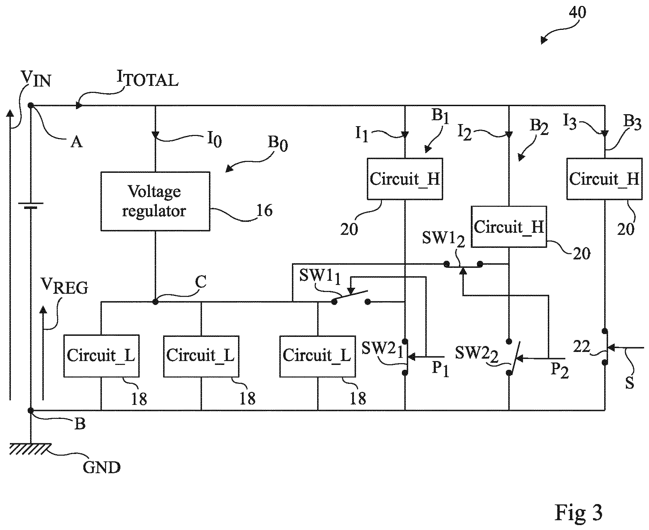

La figure 3 représente, de façon partielle et schématique, un autre mode de réalisation d'un système électronique 40. Le système électronique 40 comprend l'ensemble des éléments du système électronique 30 représenté en figure 2, et comprend, en outre, pour chacune des branches Bⱼ, j variant de 1 à N, qui sont reliées au noeud C, un premier interrupteur SW1ⱼ reliant le circuit 20 de la branche Bⱼ au noeud C et un deuxième interrupteur SW2ⱼ reliant le circuit 20 de la branche Bⱼ au noeud B. Les interrupteurs SW1ⱼ et SW2ⱼ sont commandés de façon complémentaire par un signal Pⱼ. Ceci signifie que lorsque l'un des interrupteurs SW1ⱼ et SW2ⱼ est ouvert, l'autre des interrupteurs SW1ⱼ et SW2ⱼ est fermé. Les signaux Pⱼ peuvent être fournis par l'un des circuits 18. Il est ainsi possible de connecter les branches Bⱼ munies des interrupteurs SW1ⱼ et SW2ⱼ entre les noeuds A et B ou entre les noeuds A et C. A titre d'exemple, en figure 3, on a représenté, pour la branche B₁, un interrupteur SW1₁ entre le circuit 20 de la branche B₁ et le noeud C et un interrupteur SW2₁ entre le circuit 20 de la branche B₁ et le noeud B et, pour la branche B₂, on a représenté un interrupteur SW1₂ entre le circuit 20 de la branche B₂ et le noeud C et un interrupteur SW2₂ entre le circuit 20 de la branche B₂ et le noeud B.

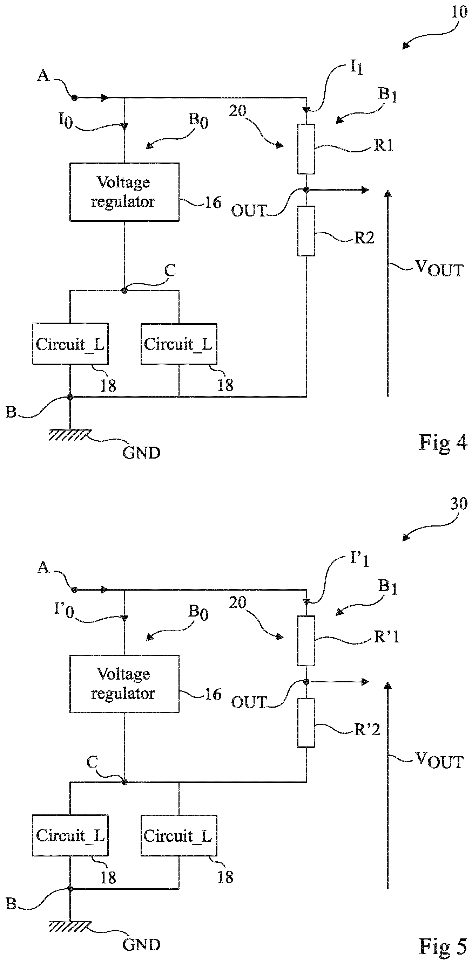

La figure 4 représente, de façon partielle et schématique, un exemple plus détaillé d'une partie du système électronique 10 de la figure 1 dans le cas où le circuit électronique 20 de la branche B₁ correspond à un diviseur de tension. Le circuit électronique 20 de la branche B₁ comprend une première résistance R1 entre le noeud A et un noeud OUT et une deuxième résistance R2 entre le noeud OUT et le noeud B. La tension V_{0UT} entre le noeud OUT et le noeud B peut être utilisée pour alimenter un autre élément du système électronique 10, non représenté.

La figure 5 représente, de façon partielle et schématique, un exemple plus détaillé d'une partie du système électronique 30 de la figure 2 dans le cas où le circuit électronique 20 de la branche B₁ correspond également à un diviseur de tension. Le circuit électronique 20 comprend une première résistance R'1 entre le noeud A et le noeud OUT et une deuxième résistance R'2 entre le noeud OUT et le noeud C. La tension V_{0UT} entre le noeud OUT et le noeud B peut être utilisée pour alimenter un autre élément du système électronique 30, non représenté. Les valeurs desrésistances R'1 et R'2 sont à ajuster pour que la tension V_{0UT} du système électronique 30 soit identique à la tension V_{0UT} du système électronique 10.

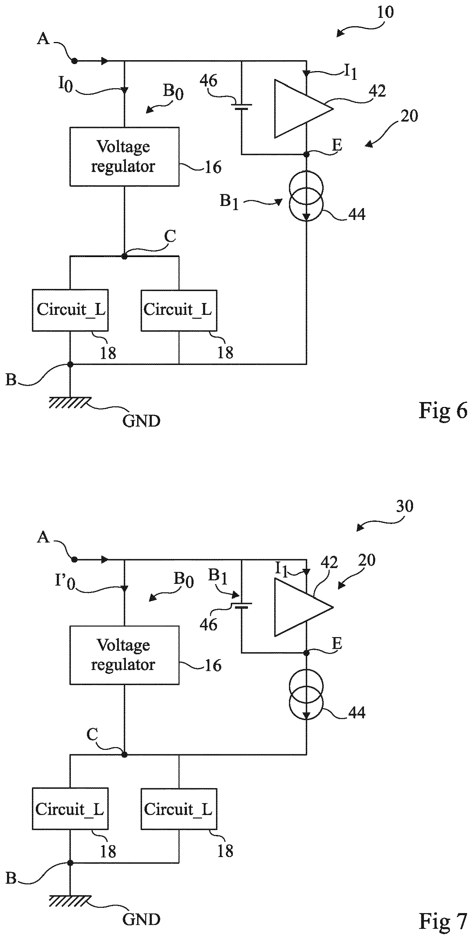

La figure 6 représente, de façon partielle et schématique, un exemple plus détaillé d'une partie du système électronique 10 de la figure 1 dans le cas où le circuit électronique 20 de la branche B₁ correspond à un circuit d'amplification. Le circuit électronique 20 de la branche B₁ comprend un amplificateur 42 dont un noeud d'alimentation est connecté au noeud A et dont l'autre noeud d'alimentation est connecté à un noeud E. Le circuit électronique 20 de la branche B₁ comprend en outre une source de courant 44, fournissant le courant I₁, entre le noeud E et le noeud B. Une source 46 d'une tension constance, par exemple une diode Zener, est prévue entre les noeuds A et E. L'entrée de l'amplificateur 42 et la sortie de l'amplificateur 42 sont connectées à d'autres circuits électroniques du système électronique 10 non représentés.

La figure 7 représente, de façon partielle et schématique, un exemple plus détaillé d'une partie du système électronique 30 de la figure 2 dans le cas où le circuit électronique 20 de la branche B₁ correspond également à un circuit d'amplification. Le circuit d'amplification de la figure 2 a la même structure que celle représentée en figure 6 à la différence que la source de courant 44 est montée entre le noeud E et le noeud C.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. Enfin, la mise en oeuvre pratique des modes de réalisation et variantes décrits est à la portée de la personne du métier à partir des indications fonctionnelles données ci-dessus.

## Revendications

1. Système électronique (30 ; 40) comprenant, électriquement en parallèle entre des premier et deuxième noeuds (A, C), au moins un premier circuit électronique (20) alimenté entre les premier et deuxième noeuds, et un régulateur (16) d'une tension (V_{REG}) entre le deuxième noeud et un troisième noeud (B), et comprenant un deuxième circuit électronique (18) entre les deuxième et troisième noeuds (C).

2. Procédé comprenant l'alimentation entre des premier et deuxième noeuds (A, C) d'au moins un premier circuit électronique (20), la régulation d'une tension (V_{REG}) entre le deuxième noeud et un troisième noeud (B) par un régulateur (16) électriquement en parallèle du premier circuit électronique entre les premier et deuxième noeuds, et l'alimentation entre les deuxième et troisième noeuds d'un deuxième circuit électronique (18).

3. Système électronique ou procédé selon la revendication 1 ou 2, comprenant un premier interrupteur (SW1₁, SW1₂) en série avec le premier circuit électronique (20) entre les premier et deuxième noeuds (A, C).

4. Système électronique ou procédé selon la revendication 3, comprenant un deuxième interrupteur (SW2₁, SW2₂) reliant le troisième noeud (B) à un noeud de connexion en série entre le premier circuit électronique (20) et le premier interrupteur (SW1₁, SW1₂) .

5. Système électronique ou procédé selon l'une quelconque des revendications 1 à 4, dans lequel au moins un troisième circuit électronique (20) est alimenté entre les premier et troisième noeuds (A, B).

6. Système électronique ou procédé selon la revendication 5, dans lequel au moins un troisième interrupteur (22) est électriquement en série avec le troisième circuit électronique (20) entre les premier et troisième noeuds (A, B) .

7. Système électronique (30 ; 40) ou procédé selon l'une quelconque des revendications 1 à 6, dans lequel le premier circuit électronique (20) comprend un diviseur de tension.

8. Système électronique (30 ; 40) ou procédé selon l'une quelconque des revendications 1 à 6, dans lequel le premier circuit électronique (20) comprend un amplificateur.

9. Système électronique (30 ; 40) ou procédé selon l'une quelconque des revendications 1 à 6, recevant entre les premier et troisième noeuds (A, B) une tension (V_{IN}) supérieure à 15 V et dans lequel le régulateur (16) est configuré pour fournir la tension (V_{REG}) entre les deuxième et troisième noeuds (B, C) inférieure à 10 V.

10. Véhicule comprenant un système électronique (30 ; 40) selon l'une quelconque des revendications 1 à 9 et une source (12) de tension alimentant le système électronique.

11. Véhicule selon la revendication 10, dans lequel la source (12) de tension comprend une batterie d'accumulateurs électriques.
